**Europäisches Patentamt**

**European Patent Office**

**Office européen des brevets**

(11) Numéro de publication: **0 014 657**
**A1**

(12) # DEMANDE DE BREVET EUROPEEN

(21) Numéro de dépôt: **80400176.6**

(22) Date de dépôt: **05.02.80**

(51) Int. Cl.³: **F 24 J 3/02**

(30) Priorité: **06.02.79 FR 7902977**

(43) Date de publication de la demande:
**20.08.80 Bulletin 80/17**

(84) Etats Contractants Désignés:
**AT BE CH DE GB IT LU NL SE**

(71) Demandeur: **Pinauldt, Jacques**
**140, avenue Ledru Rollin**
**F-75011 Paris(FR)**

(71) Demandeur: **Guillot, Christophe**
**33, rue du Bourg-Tibourg**
**F-75004 Paris(FR)**

(72) Inventeur: **Pinauldt, Jacques**
**140, avenue Ledru Rollin**
**F-75011 Paris(FR)**

(72) Inventeur: **Guillot, Christophe**
**33, rue du Bourg-Tibourg**
**F-75004 Paris(FR)**

(74) Mandataire: **Tony-Durand, Serge**
**Cabinet Tony-Durand 22, Boulevard Voltaire**
**F-75011 Paris(FR)**

(54) **Capteur solaire.**

(57) Le rayonnement solaire échauffe à travers une paroi transparente, un corps noir placé sur un support contenant un liquide caloporteur, ou un corps noir sur lequel circule de l'air à réchauffer.

Le corps noir est constitué par un ensemble de canaux parallèles 10 contenant un liquide caloporteur, de l'alumine activée 7 étant placée dans un passage 8 assurant la communication entre le volume 6 d'air intérieur au capteur, et l'atmosphère extérieure ce passage 8 étant ménagé dans une paroi du support 1 des canaux 10.

L'alumine activée dessèche l'air extérieur humide qui rentre à l'intérieur du capteur quand la température de l'air intérieur diminue, ce qui évite la condensation d'humidité sur la face inférieure de la paroi transparente, et préserve le rendement du capteur. Inversement, quand la température à l'intérieur du capteur augment, l'air chaud s'échappe à l'extérieur en régénérant le pouvoir desséchant de l'alumine activée.

./...

EP 0 014 657 A1

Fig.1

1

## Capteur solaire

La présente invention a pour objet un capteur solaire.

Plus précisément, l'invention concerne un capteur solaire du type dans lequel le rayonnement solaire échauffe, à travers une paroi transparente, un corps noir placé sur un support et contenant un liquide caloporteur, ou bien un corps noir sur lequel circule de l'air à réchauffer.

Dans le premier cas, une masse d'air est emprisonnée lors du montage du capteur, entre la paroi transparente et le corps noir. Ce dernier s'échauffant sous l'effet du rayonnement solaire, échauffe l'air ainsi emprisonné, qui subit une dilatation pouvant atteindre des valeurs extrêmement élevées. De ce fait, il est nécessaire d'agencer une communication entre l'air intérieur au capteur et l'atmosphère, pour éviter que la surpression de l'air engendrée par son échauffement n'entraîne l'explosion du capteur.

Ainsi, lorsque le rayonnement solaire échauffe l'air du capteur, un déplacement d'air s'effectue de l'intérieur du capteur vers l'extérieur. Inversement, lorsque la température de l'air à l'intérieur du capteur diminue par suite d'une baisse du rayonnement solaire, de l'air provenant de l'extérieur pénètre à l'intérieur du capteur. Or, cet air atmosphérique est plus ou moins chargé d'humidité, laquelle a tendance à se condenser sur la paroi transparente. Cette condensation d'humidité diminue considérablement le rendement du capteur, et doit donc être évitée.

Pour ce faire, on a proposé de placer sur le passage

0014657

entre l'air intérieur et l' atmosphère, des produits desséchants tels que des grains de gel de silice. Malheureusement, ces produits sont rapidement saturés d'humidité et doivent être fréquemment remplacés, de sorte qu'en pratique cette solution s'est avérée inexploitable.

On a également proposé de faire communiquer le volume d'air intérieur au capteur avec une enveloppe gonflable extérieure, qui se gonfle lorsque le rayonnement solaire frappe le capteur, et se dégonfle par temps gris ou froid. On a ainsi tenté d'utiliser des poches en caoutchouc ou en diverses matières plastiques. Mais outre le désavantage que ces poches sont très volumineuses et par conséquent encombrantes, on constate que le caoutchouc et les matières plastiques ordinaires présentent un certain degré de perméabilité à l'humidité, de sorte que le problème de l'élimination de celle-ci reste non résolu.

Dans le cas d'un capteur à air, de l'air frais et humide est introduit dans le capteur, afin d'être réchauffé sous l'effet du rayonnement solaire sur un corps noir, avant d'être extrait chaud du capteur solaire. L'air atmosphérique est plus ou moins chargé d'humidité, laquelle a tendance à se condenser sur la paroi transparente du capteur. Cette condensation diminue considérablement le rendement du capteur et doit donc être évitée.

L'invention a pour but de résoudre ces problèmes de façon commode et relativement peu onéreuse.

A cet effet, conformément à l'invention, le capteur contient de l'alumine activée pour éviter la condensation d'humidité sous la paroi transparente.

En effet, l'alumine activée a un pouvoir desséchant important, et possède en outre la particularité de régénérer son pouvoir desséchant lorsqu'elle est en contact d'air chaud. Ainsi, dans le cas des capteurs à liquide caloporteur, l'air chaud sortant du capteur régénère le pouvoir desséchant de l'alumine activée, tandis que celle-ci absorbe l'humidité de l'air atmosphérique qui entre dans le capteur, lorsque la température à l'intérieur de celui-ci diminue.

Il s'établit donc à chaque entrée et sortie d'air du capteur, une alternance de phases de dessiccation de l'air humide entrant dans le capteur par l'alumine activée, et de régénération de cette dernière par l'air chaud sortant du capteur.

Dans le cas des capteurs à air, un réservoir judicieusement placé en amont du capteur, au niveau de son alimentation en air à réchauffer et contenant également de l'alumine activée, permet d'effectuer la dessiccation de l'air humide avant son entrée dans le capteur, et ce avec une quantité d'alumine réduite par rapport aux autres produits desséchants connus.

L'invention a également pour objet l'application de l'alumine activée au maintien hors humidité des capteurs solaires précités.

D'autres particularités et avantages de l'invention apparaîtront au cours de la description qui va suivre.

Aux dessins annexés, donnés à titre d'exemple non limitatif , on a représenté deux formes de réalisation de l'invention.

- La figure 1 est une vue en coupe verticale transversale d'une première forme de réalisation d'un capteur selon l'invention, du type à liquide caloporteur.

- La figure 2 est une vue de dessus en perspective avec arrachements du capteur solaire de la figure 1.

- La figure 3 est une vue en coupe verticale simplifiée d'une seconde forme de réalisation de l'invention, constituée par un capteur du type à air.

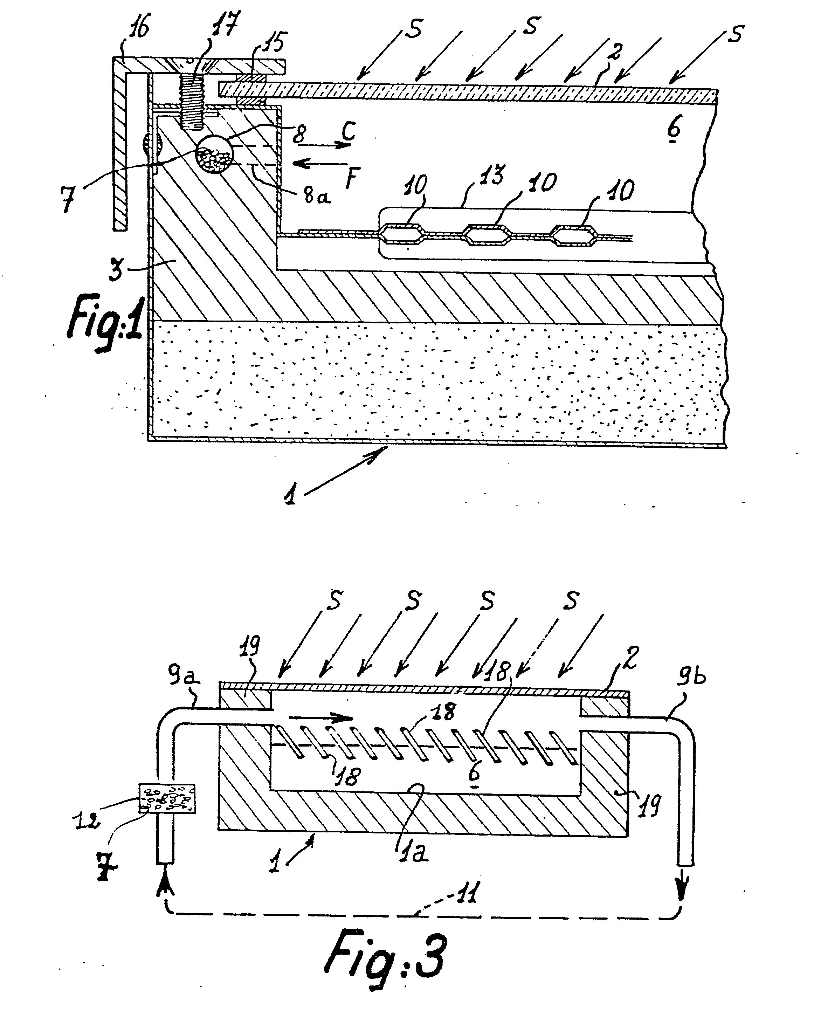

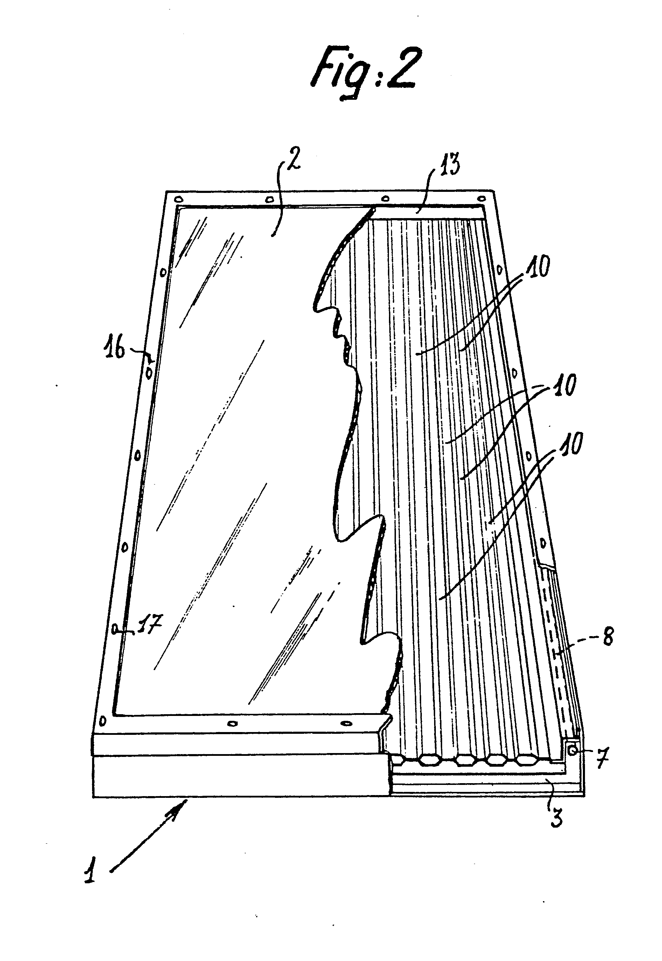

Dans la réalisation représentée aux figures 1 et 2, le capteur solaire comporte un support 1 constitué par un cadre rectangulaire, ouvert sur sa face supérieure, et dont les parois supportent une paroi transparente 2, qui peut être en verre ou en une matière plastique appropriée. Entre la paroi transparente 2 et le fond du cadre formant le support 1, sont disposés une série de canaux parallèles 10, recouverts d'un revêtement noir afin de constituer un corps noir, un liquide caloporteur circulant dans ces canaux 10. Les extrémités de ces derniers débouchent dans deux collecteurs transversaux 13, qui à leur tour sont reliés au circuit extérieur de chauffage par des canalisations non représentées.

Les canaux parallèles 10 sont délimités par deux tôles profilées, disposées symétriquement l'une par rapport à l'autre de part et d'autre d'un plan horizontal médian, ces tôles étant solidarisées ensemble, par exemple par soudage, entre les canaux 10. Le revêtement noir des canaux 10 peut être par exemple du chrome noir, ou tout autre revêtement noir approprié donnant aux canaux 10 les caractéristiques thermiques d'un corps noir.

La paroi transparente 2 est maintenue en place par encastrement de ses extrémités dans des pièces 15 supportant des cornières 16 elles-mêmes solidaires des parois du support 1 au moyen de vis telles que 17. Conformément à l'invention, de l'alumine activée 7, réalisée par exemple sous forme de grains, est contenue dans le capteur, afin d'éviter la condensation d'humidité sous la paroi transparente 2. Dans l'exemple représenté aux figures 1 et 2 l'alumine activée 7 est disposée dans un passage 8 ménagé dans la paroi longitudinale 3 du cadre 1, afin d'assurer une communication entre le volume d'air intérieur 6 et l'atmosphère extérieure. Le passage 8 se présente sous la forme d'une canalisation cylindrique, ménagée sur la plus grande partie de la longueur de la paroi 3, et qui communique d'une part par une entrée 8a avec le volume intérieur 6, et d'autre part débouche sur l'atmosphère extérieure, comme on le voit à la figure 2.

Le fonctionnement du capteur solaire ainsi réalisé est le suivant.

Lorsque le rayonnement solaire S frappe le capteur, l'air intérieur contenu dans le volume 6 s'échauffe et se dilate, de sorte qu'il s'établit une circulation d'air, symbolisée par la flèche F, de l'intérieur vers l'extérieur du capteur, par le canal 8. L'air chaud passant sur les grains d'alumine 7, régénère le pouvoir desséchant de celle-ci. Inversement, lorsque le temps devient gris ou froid, ou encore la nuit, l'air remplissant le volume 6 se refroidit et se contracte, ce qui entraîne une entrée d'air à l'intérieur du capteur à partir de l'atmosphère extérieure. L'air extérieur plus ou moins humide parcourt donc le canal 8, est desséché par les grains 7 d'alumine activée, et pénètre à l'intérieur du capteur par l'entrée 8a, comme indiqué par la flèche C.

Ainsi, l'air pénétrant dans le volume intérieur 6 est au préalable complètement desséché par l'alumine activée 7, ce qui écarte tout risque de condensation d'humidité sur la face inférieure de la paroi 2. Dans ces conditions, le rendement du capteur est entièrement préservé.

Il s'établit donc un mouvement cyclique d'entrée d'air frais à l'intérieur du capteur, lorsque la température à l'intérieur de celui-ci diminue, et d'évacuation d'air chaud à l'extérieur lorsque la température du volume d'air intérieur 6 augmente. Lorsque de l'air extérieur humide entre, l'alumine activée le dessèche au préalable, et lorsque de l'air chaud sort du capteur, cet air chaud régénère automatiquement le pouvoir desséchant de l'alumine activée 7, qui s'était plus ou moins chargée d'humidité lors de la précédente entrée d'air atmosphérique.

L'utilisation d'alumine activée selon l'invention est donc particulièrement avantageuse, en ce sens qu'elle évite l'agencement de poches gonflables extérieures encombrantes et peu efficaces . De plus, la propriété de régénération cyclique du pouvoir desséchant de l'alumine à l'air chaud supprime la nécessité de renouveler la quantité d'alumine déposée dans le canal de communication 8, ce qui rend l'utilisation de l'alumine très peu onéreuse.

Le capteur représenté à la figure 3, est du type à air.

A cet effet, le fond 1a du support 1 est revêtu d'un corps noir sur lequel circule l'air à réchauffer. Les parois 19 du cadre 1 sont percées pour recevoir des canalisations 9a, 9b, qui permettent d'alimenter le capteur en air caloporteur à réchauffer par la canalisation 9a, l'air réchauffé sortant par la canalisation 9b. De façon connue en soi, des volets inclinés 18 sont montés sous la paroi transparente 2, afin d'accroître la turbulence de l'air caloporteur et de faciliter son réchauffement. Le circuit d'air caloporteur auquel sont raccordées les canalisations 9a et 9b est connu en soi et est donc seulement symbolisé par les traits mixtes 11. Ce circuit 11 peut permettre notamment le chauffage domestique par adjonction d'un ventilateur, ou d'un extracteur d'air branché en amont ou en aval du capteur.

L'alumine activée 7 est placée en amont du support 1 du capteur, dans un réservoir 12 branché sur la canalisation 9a, afin de dessécher l'air chargé d'humidité à réchauffer, ce qui évite la formation de buée de condensation sur la face inférieure de la paroi 2.

L'invention n'est pas limitée aux formes de réalisation décrites et peut comporter des variantes d'exécution . L'agencement du passage de communication 8 contenant l'alumine peut ainsi être quelconque, de même que le conditionnement de l'alumine activée.

0014657

## REVENDICATIONS DE BREVET

1 - Capteur solaire dans lequel le rayonnement solaire échauffe à travers une paroi transparente un corps noir placé sur un support contenant un liquide caloporteur, ou un corps noir sur lequel circule de l'air à réchauffer, caractérisé en ce qu'il contient de l'alumine activée pour éviter la condensation d'humidité sous la paroi transparente.

2 - Capteur solaire selon la revendication 1, du type dans lequel le corps noir contient un liquide caloporteur, caractérisé en ce que l'alumine est placée dans un passage de communication de l'air du capteur avec l'atmosphère extérieure.

3 - Capteur solaire selon la revendication 2, caractérisé en ce que le passage de communication précité est formé par un canal ménagé dans une paroi du support, et dans lequel est déposée l'alumine activée, par exemple sous forme de grains de dimensions appropriées.

4 - Capteur solaire selon la revendication 1, du type contenant un corps noir sur lequel circule l'air à réchauffer, caractérisé en ce que l'alumine activée est contenue dans un réservoir placé extérieurement au support, en amont et au niveau de l'alimentation du capteur en air à réchauffer, ce réservoir étant relié au support du capteur.

5 - Application de l'alumine activée au maintien hors humidité de capteurs solaires, notamment conformes à l'une des revendications 1 à 4.

Fig.1

Fig.3

# Fig:2

**Office européen des brevets**

# RAPPORT DE RECHERCHE EUROPEENNE

0014657
Numéro de la demande

EP 80 40 0176

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| | VDI NÄCHRICHTEN ., vol. 30, no. 18, 07-05-1976 "Druckluft erst durch Trocknen perfekt" paragraphe: "Niedrigste Taupunkte durch Adsorption", page 10. * En entier * | 1 | F 24 J 3/02 |
| | DE - A - 2 546 069 (ABEL) * Pages 10-11; figure 1 * | 2,3 | |
| | US - A - 2 566 327 (HALLOCK) * Colonnes 1,2; figure 1 * | 4 | **DOMAINES TECHNIQUES RECHERCHES** (Int. Cl. 3) F 24 J |
| A | US - A - 3 995 614 (CERRA) | 1 | |
| A | DE - A - 2 734 232 (LORENZ) | 1 | |
| A | FR - A - 2 292 202 (ENERGIE SO-LAIRE) | 1 | |
| A | DE - A - 2 626 974 (ZINKWALZWERK) | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interference
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 09-05-1980 | SMETS |

OEB Form 1503.1   06.78